# EUROPÄISCHE PATENTSCHRIFT

(11) **EP 0 666 970 B1**
(45) Veröffentlichungstag und Bekanntmachung des Hinweises auf die Patenterteilung: **21.01.1998**
(21) Anmeldenummer: 94926230.7
(22) Anmeldetag: 01.09.1994
(51) Int. Cl.: F16K 37/00

(54) **VORRICHTUNG ZUM PRÜFEN DER FUNKTIONSFÄHIGKEIT EINER VON EINEM STELLANTRIEB ANGETRIEBENEN ARMATUR**
SYSTEM FOR CHECKING THE OPERATION OF A FITTING DRIVEN BY AN ACTUATOR
SYSTEME DE CONTROLE DE L'APTITUDE AU FONCTIONNEMENT D'UN ACCESSOIRE DE ROBINETTERIE ENTRAINE PAR UN ACTIONNEUR

(30) Priorität: 01.09.1993 DE 4329489
(43) Veröffentlichungstag der Anmeldung: 16.08.1995
(73) Patentinhaber: ELEKTRO-MECHANIK GMBH, D-57482 Wenden (DE)
(72) Erfinder: FISCHER, Klaus, Dipl.-Ing., D-50126 Bergheim (DE)
(74) Vertreter: Klingseisen, Franz, Dipl.-Ing.
(86) Internationale Anmeldenummer: EP9402910
(87) Internationale Veröffentlichungsnummer: WO9506837

(56) Entgegenhaltungen:
- EP-A- 0 133 543
- US-A- 4 888 996
- US-A- 4 891 975
- US-A- 5 199 301

## Beschreibung

Die Erfindung betrifft eine Vorrichtung nach dem Oberbegriff des Anspruchs 1.

Vorrichtungen dieser Art sind aus US 4 891 975 und US 4 888 996 bekannt, wobei insbesondere die Reibungskoeffizienten und die Kräfte, die an einer Armaturenspindel auftreten, ermittelt werden.

Der vorliegenden Erfindung liegt die Aufgabe zugrunde, eine Vorrichtung der eingangs angegebenen Art so auszubilden, daß die Vorrichtung schnell und einfach an einer Armatur angebracht und insbesondere die Stellkraftreserve der Armatur ermittelt werden kann.

Diese Aufgabe wird bei einer gattungsgemäßen Vorrichtung erfindungsgemäß durch die Merkmale im kennzeichnenden Teil des Anspruchs 1 gelöst. Durch das Vorsehen von plastisch verformbaren Stützkörpern an der Armaturenspindel kann die Prüfvorrichtung sehr viel einfacher an einer zu überprüfenden Armatur angebracht werden als eine hydraulische Vorrichtung zum Aufbringen einer Prüfkraft. Durch die plastische Verformbarkeit der Stützkörper können große Kräfte aufgenommen werden, wie sie für die Ermittlung der Stellkraftreserve erforderlich sind. Die an der Spindel tatsächlich angreifende Kraft kann aus dem beim Ansprechen des Drehmomentschalters sich ergebenden Drehmoment ermittelt werden.

Vorteilhafte Ausgestaltungen der Erfindung sind in der nachfolgenden Beschreibung und in den weiteren Ansprüchen angegeben.

Eine beispielsweise Ausführungsform der Erfindung wird nachfolgend anhand der Zeichnungen näher erläutert. Es zeigen
- Fig. 1: schematisch eine Armatur mit einer erfindungsgemäßen Meßvorrichtung
- Fig. 2: den Verlauf der Prüfkraft und des Stromes über der Zeit bei einer Armatur,
- Fig. 3: eine praktische Ausführungsform einer Meßvorrichtung in einer Draufsicht und einer Seitenansicht,
- Fig. 4: den schematischen Aufbau einer Meßanordnung zur Bestimmung der Signallaufzeit, und
- Fig. 5: ein Diagramm zur Bestimmung der Signallaufzeit.

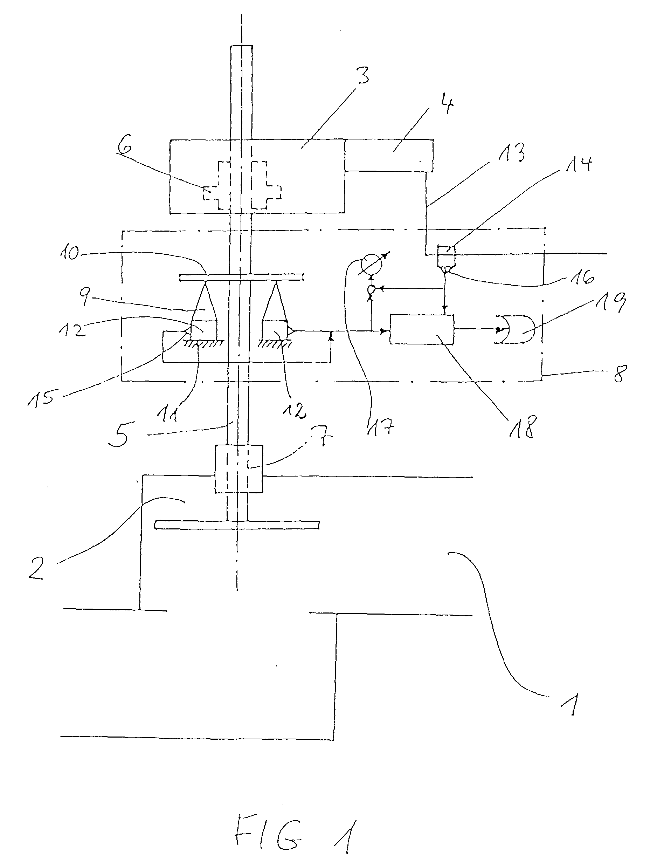

In Fig. 1 ist als Armatur ein in einer Rohrleitung 1 angeordnetes Ventil 2 schematisch dargestellt, dessen Spindel 5 von einem Stellantrieb 3 mit Elektromotor 4 in die Schließ- oder in die dargestellte Öffnungsstellung verstellt werden kann. Die Spindel 5 dieser Armatur ist mit einem Gewinde versehen, mit dem eine Spindelmutter 6 in Eingriff steht. Die Spindelmutter 6 wird durch den Elektromotor 4 über ein nicht dargestelltes Getriebe in Drehung versetzt, so daß die Spindel 5 in Achsrichtung verstellt wird. Eine Stopfbuchse 7, in der die Spindel 5 verschiebbar ist, dichtet die Rohrleitung 1 gegenüber dem Außenbereich ab. Dieser Aufbau einer Armatur ist an sich bekannt.

Erfindungsgemäß wird an einer solchen Armatur eine Meßvorrichtung 8 angebracht, die bei dem dargestellten Ausführungsbeispiel in Fig. 1 zwei Stützkörper 9 aufweist, die aus einem plastisch verformbaren Material bestehen und auf der einen Seite an einem an der Spindel 5 befestigten Anschlag 10 anliegen, während sie auf der gegenüberliegenden Seite gegen Festpunkte 11 über Kraftmeßeinrichtungen 12 abgestützt sind.

An die Zuleitung 13 des Elektromotors 4 ist ein Strommesser, Leistungsmesser oder Magnetfeldmesser 14 angeschlossen. Bei 15 und 16 sind Signalausgänge der Kraftmeßeinrichtungen 12 bzw. der Stromflußmeßeinrichtung 14 angedeutet, die mit einem Anzeigegerät 17, bspw. einem Speicheroszilloskop, verbunden sind. Zweckmäßigerweise werden die Signalausgänge 15, 16 auch mit einer Datenverarbeitungseinrichtung 18 verbunden, die mit einem Speicher 19 in Verbindung steht.

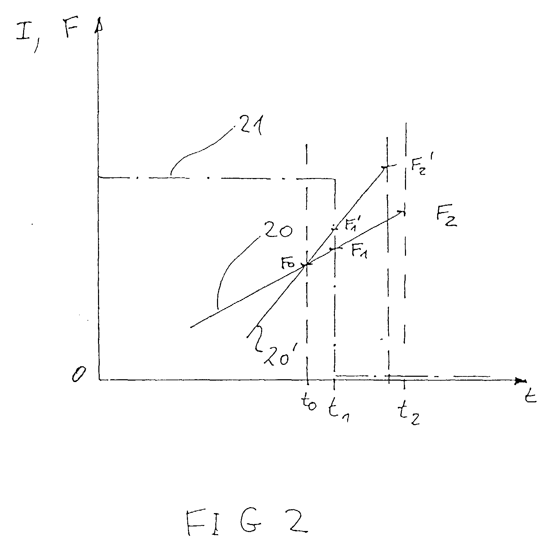

Wenn das Ventil 2 durch ein an der Spindelmutter 6 angreifendes Drehmoment des Stellantriebs 3 geschlossen wird, verformen sich die Stützkörper 9, die z.B. aus Blei bestehen, plastisch. Fig. 2 zeigt den dabei auftretenden Kraft/Zeit-Verlauf. Die mittels der Kraftmeßeinrichtungen 12 aufgezeichnete Kraft F = F(t) bei 20 erhöht sich zunächst bis ein nicht dargestelltes Leistungsschütz nach Ansprechen eines dem Elektromotor 4 zugeordneten Drehmomentschalters bei t₀ den Elektromotor bei t₁ vom Stromversorgungsnetz trennt. Dieser Zeitpunkt ist wiedergegeben durch Abfallen des mit einer Strommeßeinrichtung aufgezeichneten Stromes I = I(t) bei 21 auf 0. Die Zeit t₁ - t₀ wird Signallaufzeit genannt und kann in der Schaltanlage des Elektromotors 4 bestimmt werden. Die angezeigte Kraft F = F₁ ist die Stellkraftreserve der Armatur bei dem eingestellten Wert des Drehmomentschalters unter Berücksichtigung der Federsteifigkeit der Antriebskette. Die Federsteifigkeit der Antriebskette wird wesentlich von der Verformbarkeit der Stützkörper beeinflußt. Stellkraftreserve bedeutet hier die für die Betätigung des Ventiltellers zur Verfügung stehende Kraft unter Berücksichtigung des Spindelauftriebs durch die Strömungsverhältnisse in der Rohrleitung 1.

Infolge der kinetischen Energie des Systems Stellantrieb/Armatur steigt die Kraft F = F(t) weiter bis auf F = F₂ bei Stillstand der Armatur. Der Wert F₂ hängt ab vom Quotienten dF/dt und ist maßgebend für die Festigkeit der Armatur. Die Linie 20' in Fig. 2 zeigt den Kraftverlauf der gleichen Armatur mit schwerer verformbaren Stützkörpern als im vorhergehenden Fall, wobei jeweils höhere Werte von F₁' und F'₂ auftreten.

Die steilere Linie 20', die von einem steiferen Stützkörper 9 ausgeht, ist für Festigkeitsprüfung geeignet, während ein flacherer Kraftverlauf aufgrund eines weicheren Stützkörpers 9 mehr für die Prüfung der Funktionsfähigkeit geeignet ist, da sich bei einem weicheren Stützkörper keine starke Momentüberhöhung ergibt.

Der Stützkörper 9 hat in Fig. 1 eine etwa kegelförmige Gestalt. Es ist aber auch möglich, eine rechteckige Querschnittsform der Stützkörper vorzusehen, die gegebenenfalls auch Hohlräume aufweisen kann, um eine bestimmte Federkennlinie zu erhalten. Vorzugsweise wird der Stützkörper 9 als Ringkörper ausgebildet, der konzentrisch um die Spindel 5 angeordnet ist, so daß die Prüfkraft koaxial auf die Spindel 5 aufgebracht wird.

Bei entsprechender Auswahl der Stützkörper 9 kann so das Endanschlagsverhalten der zu prüfenden Armatur überprüft werden.

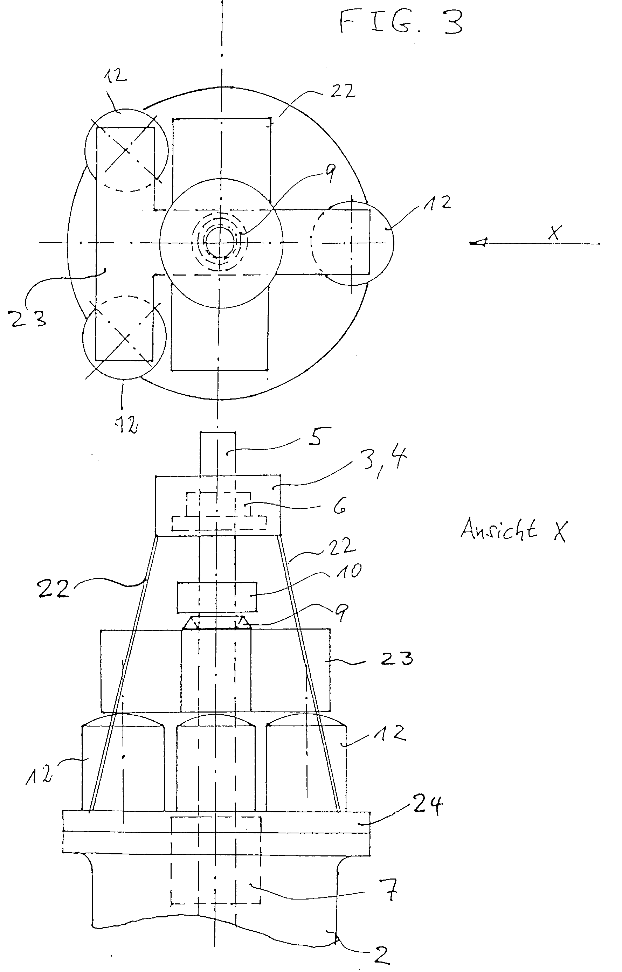

Fig. 3 zeigt eine praktische Ausführungsform der Meßvorrichtung in ihrer Anordnung zwischen Spindelmutter 6 und Stopfbuchse 7 an der Arinatur. Der Anschlag 10 an der Spindel 5 ist als geteilter Ringkörper ausgebildet, der auf dem Innenumfang mit einem dem Spindelgewinde entsprechenden Gewinde versehen ist und durch Verspannen der beiden Ringhälften auf der Spindel 5 festgelegt werden kann. Dieser Anschlagring 10 kommt bei der Axialverstellung der Spindel 5 auf einem Stützring 9 zum Anliegen, der auf der Anlageseite mit einem konisch zulaufenden Rand versehen ist, wie dies auch in Fig. 1 angedeutet ist. Damit auch dieser Stützring 9 ohne weiteres auf die Spindel 5 aufgesetzt werden kann, ist der Stützring 9 aus plastisch verformbarem Material geteilt ausgebildet. Der Stützring 9 liegt auf einem Träger 23 auf, der in der Draufsicht nach Fig. 3 bei dem dargestellten Ausführungsbeispiel etwa T-förmig ausgebildet ist, wobei die Schenkelenden dieses Trägers 23 jeweils auf in einem Dreieck angeordneten drei Kraftmeßdosen 12 aufliegen, die auf dem Flansch des Armaturendeckels 24 abgestützt sind. Der Träger 23 ist verwindungssteif ausgebildet, um die Prüfkraft aufnehmen zu können, die bei einer Drehung der Spindelmutter 6 durch den Anschlagring 10 über den Stützring 9 auf den Träger 23 und damit auf die Kraftmeßeinrichtung 12 übertragen wird. Mit 22 sind Bügel bezeichnet, mittels denen der Stellantrieb 3 und die Spindelmutter auf dem Armaturendeckel 24 abgestützt sind. Anstelle von drei Kraftmeßdosen 12 können z.B. auch vier Meßdosen 12 symmetrisch um die Spindel verteilt angeordnet werden.

Der beschriebene Aufbau der Meßvorrichtung erlaubt es, Stellkraftmessungen ohne Demontage von Armaturenteilen in kurzer Zeit durchzuführen. Dadurch wird eine eventuelle Strahlenbelastung des Meßpersonals so gering wie möglich gehalten, wenn Armaturen in strahlungsgefährdeten Bereichen überprüft werden müssen.

Mit einer geeigneten Stützeinrichtung kann die Meßvorrichtung bei Bedarf auch oberhalb der Spindelmutter 6 angebracht werden.

Zwischen dem Träger 23 und dem Stützkörper 9 kann eine Verstelleinrichtung vorgesehen werden, mittels der der Stützkörper 9 gegenüber dem Anschlagring 10 beispielsweise durch einen Schraubmechanismus vorgespannt werden kann, um die Haftreibungen in der Antriebskette zu ermitteln. Bei einer solchen Vorspannung des Stützkörpers 9 wird dessen Federkennlinie zweckmäßigerweise schwach ausgebildet.

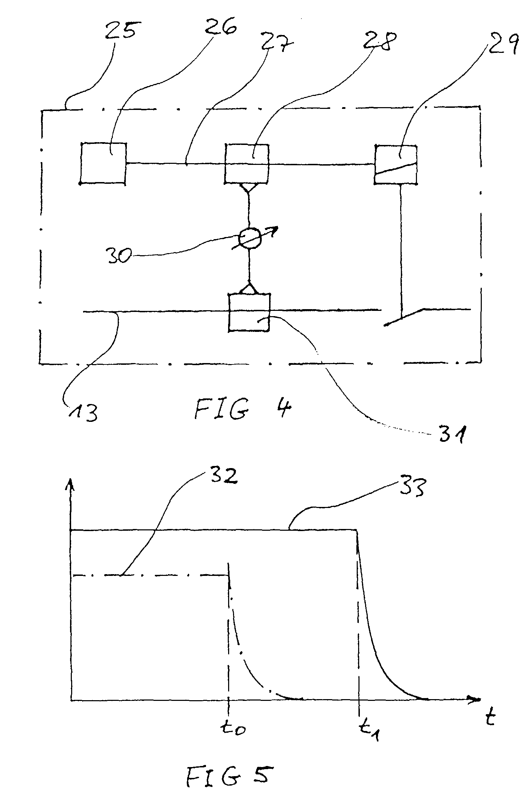

Fig. 4 und 5 erläutern die Bestimmung der Signallaufzeit in einem Schaltanlagengebäude 25. An die zwischen Drehmomentschalter 26 und Leistungsschütz 29 liegende Signalleitung 27 wird ein Gerät 28 zur Ermittlung des Signalzustandes, wie er bei 32 in Fig. 5 wiedergegeben ist, angelegt. An die Stromleitung 13 des Elektromotors 4 des Stellantriebs 3 wird ein Gerät 31 zum Registrieren des Stromzustandes angelegt, wie er bei 33 in Fig. 5 wiedergegeben ist. Zum Anzeigen des Signal- und Stromzustandes werden die Geräte 28, 31 auf ein Anzeigengerät 30, z.B. ein Oszilloskop, geschaltet.

Wenn der Drehmomentschalter 26 anspricht, ändert sich der Signalpegel 32 zur Zeit t₀ und der bei 33 wiedergegebene Strom wird daraufhin zum Zeitpunkt t₁ vom Netz getrennt. Die Zeitdifferenz t₁ - t₀ ist dann die Signallaufzeit.

Anstelle eines ringförmigen Stützkörpers 9 können auch mehrere Stützkörper symmetrisch derart um die Spindel 5 angeordnet werden, daß die Prüfkraft koaxial an der Spindel 5 angreift.

Die beschriebene Meßvorrichtung kann für bestimmte sicherheitstechnisch wichtige Armaturentypen, insbesondere in Kernkraftwerken, mit sehr geringem Zeitaufwand auf engem Raum installiert werden. Vorzugsweise wird die Meßvorrichtung für größere Ventiltypen verwendet. Insbesondere kann mittels der beschriebenen Meßvorrichtung sehr schnell bestimmt werden, ob eine Armatur den verschärften Sicherheitsvorschriften entspricht.

## Patentansprüche

1. Vorrichtung zum Prüfen der Funktionsfähigkeit einer Armatur mit einer Spindel (5), die durch ein von einem Stellantrieb (3) erzeugtes Drehmoment bewegbar ist, mit einer Einrichtung zum Ausüben einer Prüfkraft auf die Spindel (5) und mit einer Kraftmeßeinrichtung (12) zum Messen dieser Prüfkraft sowie mit einer Einrichtung (14) zum Messen der Leistungsaufnahme des Stellantriebs (3) oder des für die Spindelbewegung anliegenden Drehmoments,
**dadurch gekennzeichnet,**
daß die Einrichtung zum Ausüben einer Prüfkraft auf die Spindel aus einem an der Spindel (5) befestigbaren Anschlag (10), aus der Kraftmeßeinrichtung (12) und aus wenigstens einem plastisch verformbaren Stützkörper (9) zwischen dem Anschlag (10) und der Kraftmeßeinrichtung (12) besteht, wobei die Prüfkraft bei Bewegung des Anschlags (10) gegen den Stützkörper (9) auftritt und die Kraftmeßeinrichtung (12) dabei als Widerlager dient.

2. Vorrichtung nach Anspruch 1,
dadurch gekennzeichnet,
daß der Anschlag (10) als geteilter Ringkörper ausgebildet ist, der auf seinem Innenumfang mit einem dem Spindelgewinde entsprechenden Gewinde versehen ist.

3. Vorrichtung nach den Ansprüchen 1 oder 2,
dadurch gekennzeichnet,
daß der plastisch verformbare Stützkörper (9) als geteilter Ringkörper ausgebildet ist.

4. Vorrichtung nach einem der vorhergehenden Ansprüche,
dadurch gekennzeichnet,
daß der oder die Stützkörper (9) auf einem verwindungssteifen Träger (23) abgestützt ist bzw. sind, der seinerseits auf der an unbeweglichen Teilen der Armatur abgestützten Kraftmeßeinrichtung (12) aufliegt.

5. Vorrichtung nach Anspruch 4,
dadurch gekennzeichnet,
daß zwischen Träger (23) und Stützkörper (9) eine Verstelleinrichtung vorgesehen ist.

6. Vorrichtung nach einem der vorhergehenden Ansprüche,
dadurch gekennzeichnet,
daß an die elektrische Zuleitung (13) des Stellantriebs (3) ein Strom- oder Leistungsmeßgerät oder ein Magnetfeldmeßgerät (31) angeschlossen ist.

7. Vorrichtung nach einem der vorhergehenden Ansprüche,
dadurch gekennzeichnet,
daß der Stellantrieb (3) einen Drehmomentschalter (26) aufweist.

8. Verfahren zum Prüfen der Funktionsfähigkeit einer Armatur mit einer Spindel mittels einer Vorrichtung nach Anspruch 7,
dadurch gekennzeichnet,
daß die Prüfkraft (F) soweit erhöht wird, bis der Drehmomentschalter (26) des Stellantriebs (3) diesen abschaltet und die dabei auftretende Prüfkraft (F) als Funktion der Zeit (t) gemessen und aufgezeichnet wird.

9. Verfahren nach Anspruch 8,
dadurch gekennzeichnet,
daß die Signallaufzeit vom Ansprechen des Drehmomentschalters (26) bis zum Öffnen der Zuleitungskontakte des Stellantriebs (3) gemessen und aufgezeichnet wird.

## Claims

1. System for checking the operation of a fitting comprising a spindle (5) which is movable by a torque generated by an actuator (3), a means for exercising a checking force on the spindle (5) and a means for force measuring (12) for measuring this checking force as well as a means (14) for measuring the input of the actuator (3) or of the torque abutting for the spindle movement,
**characterized in that**
the means for exercising a checking force on the spindle consists of a stop (10) which is mountable on the spindle (5), of the means for force measuring (12) and of at least one plastically deformable supporting body (9) between the stop (10) and the means for force measuring (12), wherein the checking force is generated in case of movement of the stop (10) against the supporting body (9) and the means for force measuring (12) serves as abutment.

2. System according to claim 1,
characterized in that
the stop (10) is formed as divided annual body, which is provided on its inner circumference with a winding corresponding to the spindle winding.

3. System according to claims 1 or 2,
characterized in that
the plastically deformable supporting body (9) is formed as divided annual body.

4. System according to one of the preceding claims,
characterized in that
the supporting body or bodies (9) is or are supported on a support (23) which has twists and is rigid, and which on its part is supported on the means for force measuring (12) which is supported on immobile parts of the fittings.

5. System according to claim 4,
characterized in that
between support (23) and supporting body (9) an adjusting means is provided.

6. System according to one of the preceding claims,
characterized in that
to the electrical feed line (13) of the actuator (3) a current or capacity measuring means or a magnetic field measuring apparatus (31) is connected.

7. System according to one of the preceding claims,
characterized in that
the actuator (3) has a torque switch (26).

8. Method for checking the operation of a fitting comprising a spindle by means of a system according to claim 7,
characterized in that
the checking force (F) is increased until the torque switch (26) of the actuator (3) switches the actuator (3) off and the checking force (F) arising thereby is measured and recorded as function of time (t).

9. Method according to claim 8,
characterized in that
the signalization duration from the response of the torque switch (26) to the opening of the feed line contacts of the actuator (3) is measured and recorded.

## Revendications

1. Système de contrôle de l'aptitude au fonctionnement d'un accessoire de robinetterie comprenant un arbre (5) qui est mouvable par un moment de rotation produit par un actionneur (3), un dispositif pour exercer une force de contrôle à l'arbre (5), et un dispositif (12) pour mesurer la force, pour mesurer cette force de contrôle aussi bien qu'un dispositif (14) pour mesurer la puissance absorbée de l'actionneur (3) ou du moment de rotation adjacent pour le mouvement de l'arbre,
**caractérisé en ce que**
le dispositif pour exercer une force de contrôle à l'arbre consiste en une butée qu'on peut monter à l'arbre (5), en le dispositif (12) pour mesurer la force et en au moins un corps supportant (9) déformable plastiquement entre la butée (10) et le dispositif (12) pour mesurer la force, la force de contrôle étant produite à l'occasion- du mouvement de la butée (10) contre le corps supportant (9), et le dispositif (12) pour mesurer la force servant pour contrefort.

2. Système selon la revendication 1,
caractérisé en ce que
la butée (10) est formée comme un corps annulaire divisé, qui est muni à son circonférence intérieure avec un filet correspondant au filet de l'arbre.

3. Système selon les revendications 1 ou 2,
caractérisé en ce que
le corps supportant (9) déformable plastiquement est formé comme un corps annulaire divisé.

4. Système selon une des revendications précédentes,
caractérisé en ce que
le ou les corps supportant(s) (9) est ou sont supporté(s) à un support (23) qui a des torsions et est rigide, quel support (23) est de sa part posé sur le dispositif (12) pour mesurer la force supporté aux parts immobiles de l'accessoire de robinetterie.

5. Système selon la revendication 4,
caractérisé en ce que
entre support (23) et corps supportant (9) un dispositif pour ajuster est prévu.

6. Système selon une des revendications précédentes,
caractérisé en ce que
à l'amenée (13) electrique de l'actionneur (3) un ampèremètre ou wattmètre ou un appareil de mesure du champ magnétique (31) est branché.

7. Système selon une des revendications précédentes,
caractérisé en ce que
l'actionneur (3) comporte un commutateur du moment de rotation (26).

8. Procédé de contrôle de l'aptitude au fonctionnement d'un accessoire de robinetterie comprenant un arbre par un système selon revendication 7,
caractérisé en ce que
la force de contrôle (F) est augmentée autant que le commutateur du moment de rotation (26) de l'actionneur (3) débranche l'actionneur (3) et la force de contrôle (F) produite est mesurée et enregistrée comme fonction du temps (t).

9. Procédé selon la revendication 8,
caractérisé en ce que
la durée de signalisation de répondre du commutateur du moment de rotation (26) jusqu'à l'ouvrir des contacts de l' amenée de l'actionneur (3) est mesurée et enregistrée.
